# DEMANDE DE BREVET EUROPEEN

(11) **EP 4 304 251 A1**
(43) Date de publication de la demande: **10.01.2024**
(21) Numéro de dépôt: 22306026.0
(22) Date de dépôt: 08.07.2022
(51) Int. Cl.: H04W 48/18, H04W 84/06, H04B 7/185

(54) **DISPONIBILITE DE COUVERTURE VIA SIGNALISATION NAS**

(71) Demandeur: Thales Dis France SAS, 92190 Meudon (FR); THALES, 92400 Courbevoie (FR)
(72) Inventeur: FINE, Jean-Yves, 13010 MARSEILLE (FR); EL JAAFARI, Mohamed, 31100 TOULOUSE (FR); PANAITOPOL, Dorin, 92230 GENNEVILLIERS (FR)
(74) Mandataire: Thomas, Christine Marie Catherine

(57) **Abrégé**

La présente invention concerne un procédé de transmission d'informations de disponibilité de couverture dynamique entre un cœur de réseau, comprenant une fonction de gestion d'accès et de mobilité et collaborant avec un réseau d'accès présentant une couverture dynamique, et un terminal apte à se connecter au réseau d'accès, le procédé comprenant les étapes suivantes, pour la fonction de gestion d'accès et de mobilité :
- recevoir un ensemble de points caractérisant des positions anticipées du terminal,
- récupérer des informations de disponibilité de couverture dynamique pour au moins un point appartenant aux positions anticipées du terminal,
- envoyer au terminal un message de signalisation, dans la couche Non-Access Stratum NAS, comprenant les informations de disponibilité de couverture dynamique récupérées.

## Description

### DOMAINE TECHNIQUE

L'invention concerne le domaine des télécommunications utilisant un réseau cellulaire de 4ième (4G) et 5ième génération (5G), tel que spécifié par l'organisme de standardisation 3GPP où une couverture de réseau dynamique est proposé à des terminaux.

Un domaine d'application concerne les communications par satellite, dans le cas d'une intégration du système satellitaire au réseau cellulaire de 4ième (4G) et 5ième génération (5G), tel que spécifié par l'organisme de standardisation 3GPP (« Third Génération Partnership Project »). Un autre domaine d'application potentielle est pour les communications V2X, e.g. une voiture qui demande des informations concernant la discontinuité de la couverture avant même d'emprunter un chemin donné.

L'invention concerne ainsi un procédé de transmission d'informations de disponibilité de couverture dynamique utilisant un réseau d'accès défini selon les standards vers un terminal. L'invention s'intéresse aussi à une fonction de gestion d'accès et de mobilité, à un coeur de réseau et à un terminal pour la mise en oeuvre du procédé.

### ETAT DE LA TECHNIQUE ANTERIEURE

L'invention concerne le réseau cellulaire de 4ième (4G) et 5ième génération (5G), tel que spécifié par l'organisme de standardisation 3GPP, et par exemple développé par la suite, dans le cas d'une intégration du système satellitaire au réseau cellulaire de 4ième (4G) ou 5ième génération (5G), tel que spécifié par l'organisme de standardisation 3GPP (https://www.3gpp.org/).

A titre d'exemple le domaine d'application concernant les communications par satellite est développé par la suite. Un ensemble de satellites, gérés par un centre de contrôle satellitaire, va fournir une couverture de téléphonie mobile 4G ou 5G et ainsi servir de réseau d'accès, seul ou en complément d'un réseau terrestre, vers un coeur de réseau administré par l'opérateur de téléphonie mobile, coeur de réseau qui va mettre en oeuvre les différentes fonctions inhérentes à ce réseau : sécurité, gestion de la mobilité, facturation, etc...

Pour différentes raisons, telles que par exemple, le déploiement progressif de la constellation de satellites, les constellations ne permettent pas, par conception, une couverture totale d'une zone du globe terrestre, des opérations de maintenance, une panne partielle du système d'accès satellite, ou autre. Il est ainsi possible qu'une zone géographique donnée ne bénéficie pas d'une couverture satellitaire en continue. Une telle discontinuité et intermittence de couverture, récurrente ou non, va avoir un impact sur le système de télécommunication 4G (EPS) ou 5G (5GS).

Un terminal utilisateur (« User Equipement » en anglais - UE) va devoir connaitre les discontinuités de couverture pour se mettre en sommeil et ne rechercher le réseau satellite que si celui-ci est présent, de façon à optimiser la durée de vie de sa batterie.

De son côté, le coeur de réseau devra savoir si le terminal utilisateur est hors couverture ou au contraire sous couverture pour la gestion d'appel et de services.

Le 3GPP produit des normes définissant les besoins, l'architecture, le fonctionnement du système de communication mobile. Les premiers éléments normatifs en relation avec le système satellitaire, que ce soit géostationnaire GEO, orbite basse LEO ou en orbite moyenne MEO, ont été définis dans la « 3GPP Release-17 » et le travail normatif continue, pour des systèmes qui seront en place dans les années à venir. La gestion des informations de couverture satellitaire est un point essentiel pour une utilisation efficace des satellites dans le contexte des communications cellulaires. Il est en particulier nécessaire que les terminaux puissent être informés aussi précisément que possible sur la possibilité d'utiliser la couverture satellitaire.

Deux solutions publiées ont été identifiées pour permettre la transmission des informations de couverture au terminal.

La première solution consiste en des services de diffusion des éphémérides satellite. Cela est d'ailleurs en cours de standardisation ainsi qu'en témoignent les échanges effectués sur le serveur du 3GPP lors du meeting du groupe RAN2 organisé en mois de mai 2022.

Il s'agit ici de rajouter, dans les informations système diffusées par la cellule, un groupe d'information supplémentaire « assistance data » qui va permettre l'extrapolation par le terminal des trajectoires d'un certain nombre de satellites grâce à la diffusion des paramètres orbitaux, selon le système SGP4 « Simplified General Perturbation » [Cranford, 1970], en usage pour la détermination des satellites de basse orbite.

La diffusion des éphémérides de certains satellites via le canal de diffusion radio présente cependant les inconvénients suivants. Le principal inconvénient est que diffuser les éphémérides du satellite assurant le service et les éphémérides de satellites voisins ne suffit pas à s'assurer de la couverture anticipée effective d'une zone. Il ne suffit pas à un satellite d'être en visibilité pour qu'un terminal puisse s'y connecter. Il faut, pour le vérifier, connaitre les caractéristiques d'antenne, les bilans de liaison, l'orientation des faisceaux (« beams » en anglais) et leur empreinte au sol, intégrer les opérations de maintenance et la gestion de panne et erreurs.

Aussi, cette première solution étant basée sur la régénération des informations de couverture par le terminal à partir des éphémérides, il ne peut pas y avoir unicité de l'information entre terminaux et coeur de réseau. En outre, beaucoup de terminaux ne possèdent pas les ressources nécessaires pour effectuer une telle fonction de régénération des couvertures. En particulier, cette méthode nécessite aussi des calculs complexes de propagation d'orbites de la part du terminal utilisateur, ce qui consomme des ressources.

Cela n'est, en tout cas, pas envisageable dans un contexte d'optimisation de la fenêtre temporelle de vie des batteries pour les objets connectés. En outre, la diffusion en permanence de ces éphémérides risque de surcharger le plan de contrôle du coeur de réseau.

La seconde solution identifiée propose un service définissant la couverture pour un ensemble de points, sur internet ou dans le réseau opérateur. Ce service est accessible via des requêtes http par le terminal. Cette solution est décrite dans le document « New Solution for KI#1, KI#2: Provision of Coverage Data to a UE » pour le Study Item (SI) FS_5GSAT_Ph2 pour la Rel-18 sur le serveur du 3GPP lors du dernier meeting du groupe SA2 qui s'est tenu du 16 au 20 May 2022.

Il s'agit ici de proposer que le terminal utilisateur fasse des requêtes http dans le plan utilisateur vers un serveur de couverture sur internet et obtienne en retour une série de bitmaps définissant chacune la couverture alentour pour un instant donné.

Cette solution consistant, pour le terminal utilisateur, à faire des requêtes http dans le plan utilisateur vers un serveur internet ou dans le réseau opérateur est limitée par une communication initiée exclusivement par le terminal, ce qui exclut de pouvoir envoyer des mises à jours de la couverture à l'initiative du réseau. Aussi le protocole utilisé, i.e. http, restreint de facto la solution aux terminaux supportant le protocole IP (Internet Protocol) et, en tout cas, cette solution nécessite une connexion data dédiée.

Il existe aujourd'hui un besoin pour une solution efficace et simple qui permette à tous les terminaux, y compris les terminaux contraints, d'accéder à la connaissance de la couverture satellitaire.

### EXPOSE DE L'INVENTION

La présente invention vise à permettre une communication simple, légère à implémenter et efficace entre les terminaux et un service de fourniture de données de couverture.

La présente invention concerne un procédé de transmission d'informations de disponibilité de couverture dynamique entre un coeur de réseau, comprenant une fonction de gestion d'accès et de mobilité et collaborant avec un réseau d'accès présentant une couverture dynamique, et un terminal apte à se connecter au réseau d'accès, le procédé comprenant les étapes suivantes, pour la fonction de gestion d'accès et de mobilité :
- recevoir un ensemble de points caractérisant des positions anticipées du terminal,
- récupérer des informations de disponibilité de couverture dynamique pour au moins un point appartenant aux positions anticipées du terminal,
- envoyer au terminal un message de signalisation, dans la couche Non-Access Stratum NAS, comprenant les informations de disponibilité de couverture dynamique récupérées.

L'invention fait évoluer les protocoles de signalisation Non-Access Stratum NAS pour tenir informé le terminal des discontinuités de couverture du système d'accès. L'interface de signalisation NAS est utilisée pour transmettre du coeur de réseau vers le terminal utilisateur des informations de disponibilité de couverture satellitaire prédites le long d'une trajectoire ou pour une zone donnée.

L'invention rend possible le partage d'information détaillées de couverture du réseau d'accès, en particulier satellitaire entre coeur de réseau et terminal utilisateur. Cela permet au terminal utilisateur d'optimiser sa consommation et son accès au réseau 4G ou 5G. Sur cette base, le terminal est apte à gérer appels et services en utilisant les couvertures du réseau d'accès de façon optimale.

L'invention permet un partage d'information unique et détaillée de couverture satellitaire entre le coeur de réseau et le terminal utilisateur Cela permet au terminal utilisateur d'optimiser sa consommation et ses accès. Cela permet également au réseau 4G et 5G et au coeur de réseau de gérer appels et services.

L'invention utilise la couche Non-Access Stratum NAS et évite ainsi d'utiliser le plan utilisateur du coeur de réseau. L'échange des données est limité aux informations de disponibilité récupérées par la fonction de gestion d'accès et de mobilité du coeur de réseau AMF (« Access and Mobility Function » en anglais) dans le cas 5G ou par la fonction de réseau MME (« Mobility Management Entity » en anglais) dans le cas 4G. Une conséquence directe est que la collecte d'informations de disponibilité est centralisée par cette fonction de gestion d'accès et de mobilité ce qui assure une information fiable et complète.

L'invention est ainsi basée sur la présence essentielle dans le coeur de réseau d'une fonction de gestion d'accès et de mobilité AMF ("Access and Mobility Function" pour une alternative d'implémentation avec un réseau 5G) ou MME (« Mobility Management Entity » pour une alternative d'implémentation avec un réseau coeur 4G/LTE) qui contrôle la procédure NAS tel que décrit dans les spécifications TS 23.501/23.502, ou TS 23.401/23.402/24.301.

L'invention pourra être déployé sur tous les réseaux de 4ième et 5ième génération, par exemple disposant d'un accès possible par réseau satellitaire et qui souhaiteraient intégrer les prévisions de couverture satellitaire en faisant appel à un service de fourniture de données de disponibilité de couverture.

Par rapport à la diffusion des éphémérides de certains satellites via le canal de diffusion radio de la première solution de l'art antérieur, l'utilisation de la signalisation NAS pour envoyer des informations relatives à la couverture présente l'avantage de pouvoir évaluer la couverture future effective d'une zone par le coeur de réseau ou par une entité externe sur la base non seulement des éphémérides mais aussi des caractéristiques d'antenne et des bilans de liaison tout en intégrant la gestion de panne et erreurs, fournis par les différents sous-systèmes en charge. L'évaluation de la couverture effective résulte en la production des informations de disponibilité selon l'invention.

Aussi, les informations de disponibilité étant récupérées par la fonction de gestion d'accès et de mobilité puis envoyées au terminal, il y a donc unicité de l'information entre terminal et coeur de réseau et ainsi cohérence des procédures de gestion de la mobilité en regard de ces informations.

Enfin, l'invention ne nécessite aucune propagation d'orbites/calcul de propagation d'orbites de la part du terminal utilisateur, ce qui sauvegarde des ressources, dans un contexte d'optimisation de la durée de vie des batteries pour les objets connectés.

Par rapport à un service internet ou à un service inséré dans le réseau opérateur, accessible via des requêtes http par le terminal, selon la deuxième solution de l'art antérieur, l'utilisation de la signalisation NAS pour envoyer des informations de couverture satellitaires présente l'avantage de pouvoir mettre en oeuvre une transmission selon un mode requête/réponse ou bien selon un mode notification. Ainsi, l'initiative du transfert peut donc être à l'initiative du terminal utilisateur (mode requête/réponse) ou bien à l'initiative du réseau (mode notification).

Aussi, la transmission d'informations de disponibilité selon l'invention ne requiert pas l'allocation de ressources dans le plan utilisateur car aucune connexion de données n'est requise avec l'invention requise. Cela évite aussi toute allocation de contexte correspondant.

Encore, en s'effectuant par agrégation des données de disponibilités à des messages de signalisation existant et utilisés par ailleurs dans la couche NAS. Seuls des nouveaux champs dans les protocoles NAS existants sont ajoutés

Enfin, en proposant une standardisation des messages, l'invention assure l'interopérabilité entre terminaux et coeur de réseau.

Selon une caractéristique avantageuse de l'invention, les informations de disponibilité de couverture dynamique comprennent des événements liés à la couverture dynamique, un événement étant qualifié par une nature d'événement, un horodatage (ou plusieurs horodatages) et des coordonnées d'un point (ou de plusieurs points) des positions anticipées du terminal.

Cette caractéristique permet de limiter les informations de disponibilité aux événements marquant un changement de couverture pour un point (ou plusieurs points) donné(s) à un instant (ou plusieurs instants) donné(s).

Avantageusement, la nature d'événement est une absence de couverture ou une présence de couverture.

Cette définition de deux natures d'événement seulement permet de coder de manière simple les changements attendus sur les positions anticipées du terminal. Cela permet de coder cette information sur un seul bit ce qui est avantageux en termes de signalisation et de ressources. Cela permet de donner un statut « présence ou absence » sur la situation présente au moment de la sollicitation du service de fourniture d'informations de disponibilité et aussi de signaler une récupération de couverture ou une perte de couverture. Il est donc avantageux et suffisant de n'implémenter que deux natures d'événements.

Cela permet d'optimiser la quantité de données plutôt que de fournir une carte de points sur la totalité des positions anticipées. Une nature « récupération de couverture » peut être ajoutée pour distinguer la récupération de la couverture après un trou de couverture et une nature « perte de couverture » pour distinguer l'entrée dans un trou de couverture.

Selon une caractéristique avantageuse, un pas de sur-échantillonnage des positions anticipées du terminal étant défini, les informations de disponibilité de couverture dynamique sont limitées à des points sur-échantillonnés selon le pas de sur-échantillonnage.

L'ensemble de points reçus constitue un premier échantillonnage de la zone ou trajectoire. L'utilisation d'un pas de sur-échantillonnage est intéressant pour régler la finesse de détermination de la disponibilité de couverture.

Avantageusement, un type de zone est associé à l'ensemble de points caractérisant des positions anticipées du terminal, la zone alors définie par l'ensemble de points pouvant être de type trajectoire ou de type polygone ou de type polyèdre dans lequel le terminal est susceptible d'évoluer.

Cela permet d'affiner la connaissance des possibles positions anticipées du terminal. Il reste possible, pour la détermination des informations de disponibilité, de considérer par défaut l'ensemble de points reçus avec une marge autour de ces points pour déterminer une zone de positions anticipées. Cependant la connaissance du type de zone définie par les points reçus permet de mieux caractériser les positions anticipées du terminal.

Les informations de disponibilité sont donc liées à une trajectoire ou à une zone d'évolution géographique, ainsi qu'au pas de sur-échantillonnage. Une fenêtre temporelle d'étude peut être prédéfinie et fixe ou requise et définie en même temps que sont fournis les éléments reçus par la fonction de gestion d'accès et de mobilité.

Selon une autre caractéristique avantageuse, les informations de disponibilité de couverture dynamique sont récupérées auprès d'un service de fourniture d'informations de disponibilité de couverture dynamique centralisé associé au coeur de réseau.

Un tel service, collaborant avec le système de gestion satellitaire, peut être externe au coeur de réseau ou être intégré au coeur de réseau comme cela a, par ailleurs, été décrit dans la demande de brevet européen n°22305714.

Aussi, selon un mode de réalisation préféré, le service de fourniture d'informations de disponibilité de couverture dynamique centralisé est intégré au coeur de réseau en tant que fonction de réseau selon une architecture de services.

Selon un mode de réalisation particulier de l'invention, l'ensemble de points est reçu en provenance du terminal, celui-ci étant apte à déterminer sa position et des positions futures.

Dans ce mode de réalisation, le terminal demande, en utilisant des messages de signalisation NAS existants et standardisés, des informations de couverture au coeur de réseau, en précisant lui-même les éléments qui permettent de déterminer les informations de disponibilité. Le coeur de réseau retourne des projections sur l'exposition de la trajectoire ou de la zone, avec les localisations et les éléments de datation correspondants.

Selon un autre mode de réalisation particulier, l'ensemble de points est reçu en provenance d'une entité de gestion du réseau ayant accès à la position du terminal et aux positions anticipées.

Ce mode de réalisation peut coexister avec le précédent mode de réalisation particulier entre un coeur de réseau et un terminal. Ces deux modes de réalisation s'adressent à des situations différentes mais pouvant néanmoins être rencontrées par un terminal. Ce mode permet de pousser des informations de disponibilité vers un terminal sans que celui-ci en est fait lui-même la requête. Il peut ainsi permettre de signaler des informations de couverture à des terminaux par ailleurs passifs et ne disposant pas de moyens de déterminer les positions anticipées par exemple. Cela permet en particulier d'adresser des terminaux contraints ou des situations d'urgence.

Dans un autre mode de réalisation particulier, le procédé comprend des étapes de :
- enregistrement du terminal à un service de mise à jour des informations de disponibilité de couverture dynamique,
- envoi automatique d'informations de disponibilité de couverture dynamique mises à jour au terminal dans un message de signalisation dans la couche NAS.

Ce mode de réalisation permet au terminal d'être enregistré auprès de la fonction de gestion d'accès et de mobilité du coeur de réseau pour être tenu à jour des évolutions éventuelles des informations de disponibilité de couverture.

Ainsi, avantageusement, les informations de disponibilité de couverture dynamique mises à jour sont reçues dans un message de mise à jour de configuration tel que déjà défini dans les protocoles NAS.

L'invention concerne aussi une fonction de gestion d'accès et de mobilité intégrée à un coeur de réseau collaborant avec un réseau d'accès présentant une couverture dynamique, la fonction de gestion d'accès et de mobilité comprenant une interface de communication configurée pour communiquer avec un terminal apte à se connecter au réseau d'accès,

La fonction de gestion d'accès et de mobilité étant configurée pour réaliser un procédé selon l'une des revendications précédentes, et pour cela, configurée pour :
- recevoir un ensemble de points caractérisant des positions anticipées du terminal,
- récupérer des informations de disponibilité de couverture dynamique pour au moins un point appartenant aux positions anticipées du terminal,
- envoyer au terminal un message de signalisation, dans la couche NAS, comprenant les informations de disponibilité de couverture dynamique récupérées.

Cette fonction de gestion d'accès et de mobilité peut mettre en oeuvre chacun ou plusieurs des modes de réalisation et caractéristiques avantageuses décrites ci-dessus.

L'invention concerne également un coeur de réseau comprenant une telle fonction de gestion d'accès et de mobilité.

Selon le mode de réalisation préféré, un service de fourniture d'informations de disponibilité de couverture dynamique est intégré au coeur de réseau en tant que fonction de réseau selon une architecture de services.

Ce mode de réalisation correspond à l'invention décrite et protégé dans la demande de brevet européen n°22305714.

L'invention concerne enfin un terminal apte à se connecter à une fonction de gestion d'accès et de mobilité d'un coeur de réseau selon l'invention via un réseau d'accès présentant une couverture dynamique, le terminal comprenant en outre un dispositif de géolocalisation pour déterminer sa position géographique, le terminal étant configuré pour :
- recevoir, en provenance de la fonction de gestion d'accès et de mobilité, un message de signalisation dans la couche NAS comprenant des informations de disponibilité de couverture dynamique,
- gérer les connexions au réseau d'accès en fonction des informations de disponibilité de couverture dynamique reçues et de la position géographique du terminal.

Avantageusement, le terminal est en outre configuré pour :
- déterminer un ensemble de points caractérisant des positions anticipées du terminal,
- envoyer, à la fonction de gestion d'accès et de mobilité, un message dans la couche NAS incluant l'ensemble de points ainsi déterminé pour lui permettre de récupérer les informations de disponibilité.

Ainsi, lorsque le terminal utilisateur UE envoie un message de signalisation NAS sur le réseau 4G ou 5G via un accès satellite ou terrestre, le terminal UE associe aux éléments d'information déjà définis pour ce message un nouvel élément d'information contenant l'ensemble des positions anticipées {P0, P1, P2, ..., Pn}, un type pour discriminer entre plusieurs options de définition de zone comme e.g. trajectoire ou zone d'évolution/zone d'intérêt ou points d'intérêt, ainsi qu'un « pas » pour donner une distance minimum entre deux points d'une trajectoire ou d'un polyèdre, ainsi qu'avantageusement une durée d'étude pour laquelle le coeur de réseau doit renseigner les événements liés à la couverture des points ainsi définis par sur-échantillonnage en utilisant le pas.

De manière générale, il est noté ici que les différentes caractéristiques et modes de réalisation/fonctionnement peuvent être implémentés seul ou en association ou juxtaposition avec l'un(e) ou l'autre des caractéristiques et modes de réalisation ainsi que revendiqués. Un mode de réalisation peut donc être implémenté concomitamment avec un autre. Cela permet notamment de traiter des situations différentes selon le contexte ou besoin rencontré. En particulier, il est clair que les deux modes de réalisations sur requête ou sur enregistrement sur un service de notification peuvent être implémentés en même temps.

On note aussi ici que les revendications ont été centrées sur un procédé de transmission présentant des caractéristiques spécifiques pour une fonction de gestion d'accès et de mobilité AMF/MME. Il va sans dire que toute revendication d'une autre catégorie, par exemple visant un coeur de réseau comprenant une fonction de gestion d'accès et de mobilité avec ces mêmes caractéristiques et comportements est à considérer comme étant décrite dans la présente demande et pouvant être ultérieurement revendiqué en tant que tel.

En particulier la fonction de gestion d'accès et de mobilité selon l'invention peut présenter toutes les caractéristiques et comportements/configurations tels que revendiquées pour le procédé et ces caractéristiques et comportements/configurations pourront ultérieurement être revendiqués en lien avec la fonction.

Ainsi, en résumé, avec l'invention, on évite de diffuser plusieurs paramètres et de laisser le terminal faire sa propre prédiction de discontinuité, ce qui peut ne pas être fiable et n'est pas optimal du point de vue de l'économie d'énergie puisque le terminal doit faire des extrapolations de calcul. Avec l'invention, le coeur de réseau, plus précisément sa fonction de réseau de gestion d'accès et de mobilité (AMF/MME) a accès à un service capable de prédire et de vérifier la couverture future pour un terminal en fonction de paramètres définissant la zone où le terminal se situe. La couche NAS est utilisée entre le terminal et la fonction de réseau AMF pour fournir des informations sur la discontinuité au terminal, optimisées en termes de taille des données, ne nécessitant pas de configuration de support supplémentaire, et compatibles avec tous les UE 5G.

Pour la réalisation des objectifs précédents et des objectifs connexes, un ou plusieurs modes de réalisation comprennent les caractéristiques décrites ci-après de manière complète et détaillée.

### BREVE DESCRIPTION DES DESSINS

La description suivante et les dessins annexés exposent en détail certains aspects illustratifs et ne représentent que quelques-unes des diverses manières dont les principes de l'invention peuvent être employés. D'autres avantages et caractéristiques nouvelles apparaîtront dans la description détaillée suivante, lorsqu'ils seront considérés conjointement avec les dessins, et les modes de réalisation divulgués sont destinés à inclure tous ces aspects et leurs équivalents.
- La figure 1 montre schématiquement l'architecture protocolaire d'un réseau 5G, les mêmes concepts sont présents en 4G;
- La figure 2 montre schématiquement les éléments constitutifs d'un réseau 5G dans lequel peut être implémentée l'invention ;
- La figure 3 décrit comment l'invention s'insère dans le diagramme de séquence définissant la procédure d'enregistrement sur la couche NAS dans le cas d'un accès 5G ;
- La figure 4 montre schématiquement le contexte de l'invention ; et
- La figure 5 illustre schématiquement un sur-échantillonnage d'une zone définie par un ensemble de points définissant les positions anticipées d'un terminal ;

Les figures 6A, 6B et 6C illustrent le fonctionnement de l'invention dans un exemple d'application où les positions anticipées du terminal sont situées sur une trajectoire ;

La figure 7 montre un mode de réalisation préféré de l'invention.

### DESCRIPTION DETAILLEE DES FIGURES ET DES MODES DE REALISATION

Pour une compréhension plus complète de l'invention, celle-ci va maintenant être décrite en détail en référence aux figures ci-jointes. La description détaillée illustrera et décrira ce qui est considéré comme un mode de réalisation préféré de l'invention. Il faut bien sûr comprendre que diverses modifications et changements de forme ou de détail pourraient facilement être apportés sans s'écarter de la portée de l'invention. Il est donc prévu que l'invention ne soit pas limitée à la forme et aux détails exacts montrés et décrits ici, ni à rien de moins que l'ensemble de l'invention divulguée ici et revendiquée ci-après. Les mêmes éléments ont été désignés par les mêmes références dans les différents dessins. Pour des raisons de clarté, seuls les éléments et les étapes qui sont utiles à la compréhension de la présente invention ont été montrés dans les dessins et seront décrits.

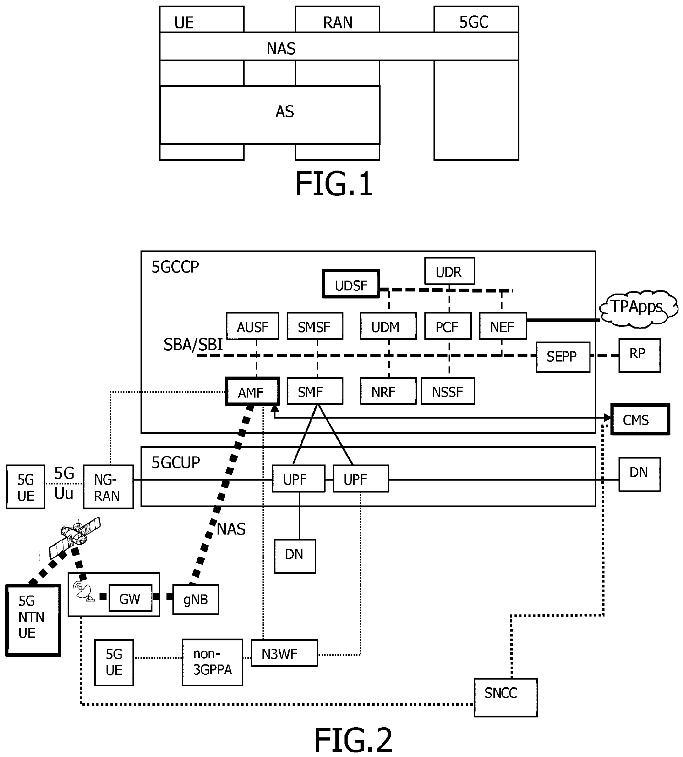

L'architecture et les procédures inhérentes au réseau 5G sont spécifiées dans les normes TS 23.501, TS 23.502 « Non-Access-Stratum (NAS) protocol for 5G System (5GS) ». La signalisation permettant l'établissement, la gestion de session, de mobilité et de la sécurité des échanges entre le coeur de réseau et l'UE est définie dans la norme TS 24.501. Cela est illustré sur la figure 1 où figurent les différentes couches de communication entre un terminal UE et un coeur de réseau 5GC via un réseau cellulaire RAN (« Random Access Network » en anglais).

Les spécifications équivalentes pour la 4G sont respectivement pour l'architecture et les procédures les normes TS 23.401, 23.402 et pour la signalisation la TS 24.301 « Non-Access-Stratum (NAS) protocol for Evolved Packet System (EPS) ».

Cette couche de signalisation 4G ou 5G est appelée « NAS - Non Access Stratum », par opposition à la couche « AS - Access Stratum ».

La couche AS permet l'établissement et la gestion des canaux radio entre le terminal et la station de base. Les protocoles radio entre les terminaux et le réseau cellulaire RAN sont établis dans cette couche qui, en outre, transporte l'information sur le réseau cellulaire.

La couche NAS est une couche fonctionnelle normalement utilisée pour gérer l'établissement des sessions de communication et pour maintenir des communications continues avec le terminal en mobilité. La couche NAS définit pour sa part l'ensemble des messages échangés entre le terminal UE et le coeur de réseau, dont le point d'entrée est la fonction de réseau AMF (« Access and Mobility management Function ») pour la 5G et le MME (« Mobility Management Entity ») pour la 4G. C'est cette signalisation NAS qui est utilisée selon l'invention de manière originale et non connue à ce jour.

L'établissement d'une session PDU est réalisée en utilisant la couche NAS.

Plus précisément, l'invention propose, dans une réalisation exemplaire décrite ci-après, que le terminal demande, en utilisant des messages de signalisation NAS existants par définition dans les normes, des informations de disponibilité de couverture au coeur de réseau. Il précise pour cela avantageusement une trajectoire ou une zone d'évolution géographique, ainsi qu'un pas et une durée d'étude. Le coeur de réseau retourne, selon l'invention, ses projections sur l'exposition de la trajectoire ou de la zone, avec les localisations et les éléments de datation correspondants en utilisant également des messages de signalisation NAS existants par définition dans les normes.

Il est également envisagé selon l'invention que le coeur de réseau notifie de façon asynchrone le terminal de tout changement dans la couverture pour la trajectoire ou la zone.

La figure 2 présente l'ensemble des éléments constitutifs des différents sous-systèmes, dans le cas d'un réseau 5G. Cette figure est extraite des documents standardisés où une description détaillée est accessible. Pour la mise en oeuvre de l'invention, il est important de noter que, parmi les éléments constitutifs figure coeur de réseau 5GC, découpé en un plan utilisateur 5GCUP et un plan de contrôle 5GCCP. Le plan de contrôle 5GCCP inclut un élément central de gestion d'accès et de mobilité nommé AMF (pour « Access Management Function » en anglais) en charge de la signalisation avec des terminaux utilisateur 5G UE pouvant se connecter à un réseau terrestre et des terminaux 5G NTN UE pouvant se connecter à un réseau terrestre ou à un réseau non terrestre. La fonction de réseau centrale AMF est la fonction de gestion d'accès et de mobilité au sens de l'invention comme au sens du standard. Les termes AMF désignent donc dans la suite la fonction AMF ou son équivalent MME défini en 4G.

Un terminal utilisateur 5G NTN UE mis en évidence par un trait gras peut se connecter au coeur de réseau selon au moins deux modalités : un accès terrestre, typiquement via un réseau d'accès nouvelle génération NG-RAN et un accès satellite 3GPP via une passerelle GW dédiée. Un tel terminal 5G NTN UE a généralement en outre la possibilité de se connecter au coeur de réseau via un accès terrestre non 3GPP, par exemple via Wi-Fi.

Le trait pointillé épais illustre la circulation de messages dans la couche NAS telle qu'utilisé par les éléments du plan de contrôle 5GCCP ainsi que par l'invention.

Pour les besoins de l'invention, il est nécessaire que la fonction de gestion d'accès et de mobilité AMF puisse communiquer avec un service CMS (« Coverage Map Server » en anglais) de gestion des cartes de couverture apte à fournir des informations de couverture dynamique. Ainsi, l'invention propose, dans une réalisation illustrative décrite ci-après, que le terminal demande, en utilisant des messages de signalisation NAS existants par définition dans les normes, des informations de disponibilité de couverture au coeur de réseau. Il précise pour cela avantageusement une trajectoire ou une zone d'évolution géographique, ainsi qu'un pas et une durée d'étude. Le coeur de réseau retourne, selon l'invention, ses projections sur l'exposition de la trajectoire ou de la zone, avec les localisations et les éléments de datation correspondants en utilisant également des messages de signalisation NAS existants par définition dans les normes.

Il est également envisagé selon l'invention que le coeur de réseau notifie de façon asynchrone le terminal de tout changement dans la couverture pour la trajectoire ou la zone.

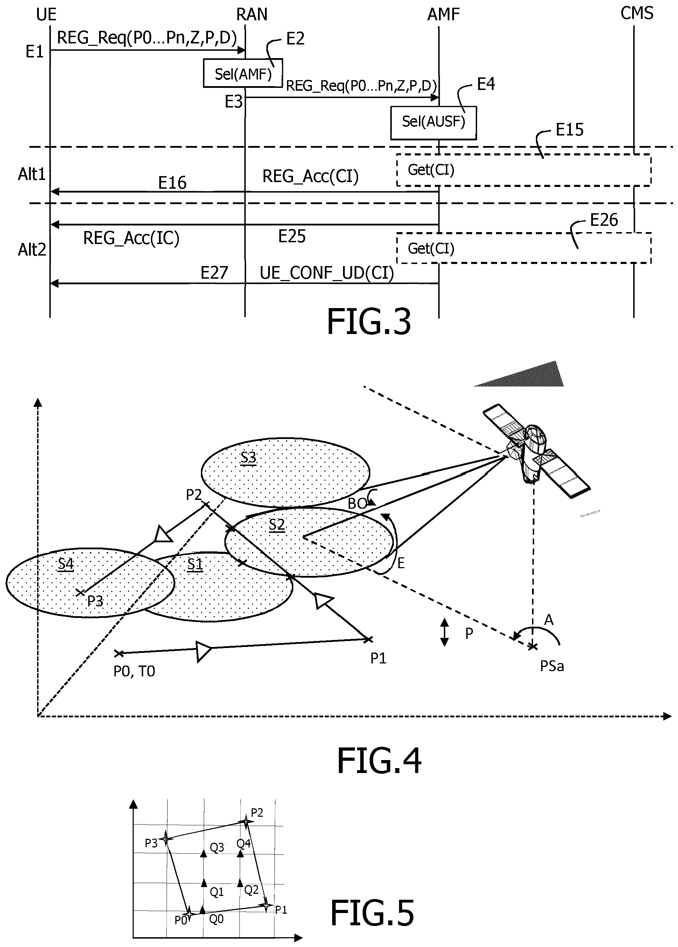

La figure 3 décrit comment l'invention s'insère dans le diagramme de séquence définissant la procédure d'enregistrement sur la couche NAS dans le cas d'un accès 5G mettant en oeuvre un terminal UE, un réseau d'accès RAN, une fonction de gestion d'accès et de mobilité AMF et un service de fourniture d'informations de disponibilité de couverture dynamique CMS, par ailleurs représenté sur la figure 2.

On note ici que le service de fourniture d'information de disponibilité peut être pris en charge par la fonction de réseau AMF elle-même qui centraliserait alors des données de couverture fournies par exemple par un centre de contrôle du système satellitaire SNCC (« Satellite Network Control Center » en anglais) et qui produirait elle-même les informations de disponibilité.

Pour les besoins d'illustration, un exemple de procédure « REGISTRATION 5G », utilisée pour bénéficier d'un service ainsi que décrit dans le standard, est ici détaillée mais d'autres procédures appartenant aux protocoles NAS comme e.g. « PDU SESSION » en 5G, ou e.g. un PDN CONNECTIVITY en 4G, un NAS PDU ou autre message, pourraient être utilisées pour la mise en oeuvre de l'invention dès lors qu'il s'agit de procédures effectuées dans la couche NAS. Des détails de la procédure d'enregistrement utilisées dans cet exemple sont donnés dans le document public : TS 23.502 §4.2.2 Registration procedures.

Dans une première étape E1, le terminal UE envoie une demande d'enregistrement REG_Req au réseau d'accès RAN qui sélectionne une fonction de gestion d'accès et de mobilité AMF de desserte dans une étape E2. Le réseau d'accès RAN transfère alors la demande à la fonction de réseau AMF dans une étape E3. Cela s'applique notamment pour un enregistrement initial, un enregistrement périodique ou une mise à jour d'enregistrement. La demande d'enregistrement REG_Req inclut au moins une liste de points P0... Pn et, avantageusement, un type Z de zone, un pas d'échantillonnage P, une fenêtre temporelle ou période d'étude D.

Dans le mode de réalisation préféré, les éléments fournis par le terminal utilisateur UE sont donc :
- Une série de positions {P0, P1, ..., Pn} définissant sa position courante (P0) et un certain nombre de points de passage de sa trajectoire future anticipée. Une telle série de point peut aussi déterminer une zone d'évolution pour le terminal utilisateur UE. Dans ce cas, un élément d'information, i.e. un type de zone, définissant s'il s'agit d'une trajectoire ou d'une zone d'évolution est alors avantageusement fourni par le terminal utilisateur UE. Un point (Pi) est défini selon un système de coordonnées universelles qui permet de le localiser de façon unique à la surface du globe. Par exemple un triplet (Latitude, Longitude, Altitude). Cette série de points représente un premier échantillonnage de la zone.
- Un « pas » P ou distance minimale de sur-échantillonnage de la trajectoire ou de la zone.
- Une durée D pendant laquelle le terminal s'attend à recevoir des informations sur la couverture de la trajectoire ou de la zone.

Ainsi qu'illustré par l'étape E4, la fonction de réseau AMF exécute alors les procédures habituelles conformément à TS23.501/23.502 comprenant une sélection d'AUSF pour l'authentification et la sécurité, une sélection d'UDM et de PCF.

Ensuite, selon une première alternative Alt1, dans une étape E15, la fonction de réseau AMF, en coordination avec un service de fourniture d'informations de disponibilité CMS (« Coverage Map Server » en anglais) ayant connaissance des cartes de couverture dynamique, la fonction de réseau AMF détermine une liste d'événements de couverture pour les positions échantillonnées avec le pas d'échantillonnage et pour une période anticipée de la fenêtre temporelle d'étude constituant des informations de disponibilité CI (« Coverage Information » en anglais). Des détails sur la détermination des événements sont donnés dans la suite de la description.

Puis, dans une étape E16, les informations de disponibilité CI incluant la liste des événements de couverture pour les positions échantillonnées est envoyée au terminal par la fonction de réseau AMF dans la couche NAS, typiquement par un message d'acceptation d'enregistrement REG_Acc dans la première alternative Alt1.

Les événements sont qualifiés à minima selon l'invention. Cela signifie qu'a minima les coordonnées d'un point d'échantillonnage, un horodatage absolu et une nature d'événement de couverture, perte ou récupération, qualifient l'événement. Avantageusement, le type de couverture (LEO/MEO/GEO/terrestre) et une identification de cellule sont aussi inclus dans les informations de disponibilité CI. Cela est aussi détaillé dans la suite.

L'exemple proposé utilise des messages standardisés REG_Req demandant l'enregistrement, « REGISTRATION REQUEST » en anglais, et REG_Acc acceptant l'enregistrement, « REGISTATION ACCEPTATION » en anglais, pour transmettre les informations nécessaires pour déterminer/anticiper la discontinuité de couverture.

Ainsi selon une seconde alternative Alt2, la fonction de réseau AMF envoie dans une étape E25 un message d'acceptation de l'enregistrement REG_Acc du terminal UE en dehors de toute transmission de données de disponibilité. Ensuite la fonction de gestion d'accès et de mobilité AMF récupère les informations de disponibilité CI dans une étape E26 auprès du service CMS. Enfin, il pousse les informations de disponibilité CI dans un message dans la couche NAS en tant que service. Ce mode « push » des informations de disponibilité CI est avantageusement implémenté avec un message de mise à jour de la configuration UE_CONF_UD (ou UCU) incluant les informations de disponibilité CI ainsi qu'illustré par l'étape E27.

On note ici que le message NAS UE_CONF_UD permet pour la 5G la configuration du terminal tel que spécifié de la manière suivante dans le paragraphe §4.2.4 de la TS 23.502 : "La configuration de l'UE peut être mise à jour par le réseau à tout moment en utilisant la procédure de mise à jour de la configuration de l'UE. La configuration de l'UE comprend : Les paramètres liés à la gestion de l'accès et de la mobilité décidés et fournis par l'AMF".

Comme alternative de fonctionnement et d'implémentation, le terminal UE peut aussi utiliser une procédure d'établissement de session « PDU SESSION ESTABLISHMENT » tel que standardisé également. Il peut aussi utiliser d'autres types de messages standardisés dont la demande de service « SERVICE REQUEST » ou tout autre message en voie montante « uplink » de type NAS.

On note ici que, dans le cas d'un réseau 4G, selon le même principe, la procédure ATTACH d'attachement au réseau, mais aussi par exemple la procédure de TRACKING AREA UPDATE, ou un (NAS) ATTACH REQUEST/RESPONSE, ou PDN CONNECTIVITY REQUEST/RESPONSE, d'identification (e.g. IDENTITY REQUEST/RESPONSE), d'authentification (e.g. AUTHENTIFICATION REQUEST/RESPONSE) ou tout autre procédure NAS bidirectionnelle peut être utilisée pour porter l'échange des éléments d'information spécifiques de l'invention. Par exemple, les informations P0... Pn peuvent être transportés aussi dans un (NAS) ATTACH REQUEST, un (NAS) IDENTITY RESPONSE ou (NAS) AUTHENTIFICATION RESPONSE.

Aussi l'exemple proposé présente une réception des informations sur les positions du terminal P0... Pn en provenance du terminal UE lui-même. Ainsi, le procédé selon l'invention est déclenché à l'initiative du terminal utilisateur UE.

Comme alternative d'implémentation, l'anticipation de la discontinuité de couverture peut être faite et peut aussi démarrer à l'initiative du réseau. Pour illustrer ce cas, la demande initiale de détermination de la discontinuité de service peut provenir d'un serveur PS, pour « Public Safety » en anglais, extérieur au coeur de réseau 4G/5G. De tels serveurs ont en effet besoin de vérifier si un terminal UE sera toujours disponible prochainement pour une communication ou pour identifier la cause de la perte de communication en cours avec le terminal UE de l'utilisateur final. Si la communication est perdue à cause d'un désastre naturel, le serveur PS peut ainsi lancer une alerte et identifier, autant que possible, la dernière position connue du terminal UE pour une mission de sauvetage par exemple.

Dans ce cas où le procédé est déclenché à l'initiative du réseau, la fonction de gestion d'accès et de mobilité AMF/MME prend l'initiative d'informer le terminal UE avec des informations de disponibilité CI relatives à la zone/les zones de couverture et la zone/les zones hors couverture, ces zones étant définies avec des points et un type de zone qui peut être une surface, un volume ou une trajectoire, ou tout simplement des points d'intérêt/d'échantillonnage. Dans cette hypothèse, la fonction de réseau AMF pousse les informations de couverture CI dans la couche NAS vers le terminal UE supportant la fonction. On note ici qu'il est également possible de fournir des informations sur la couverture pour tout type de RAT présentant une couverture dynamique, et pas seulement pour les systèmes satellitaires NG-RAN.

Dans un mode de réalisation secondaire, uniquement valable pour la 5G, la fonction de réseau AMF peut aussi recevoir les éléments ci-dessus relatifs aux positions du terminal utilisateur UE via des voies alternatives, dans le cas où le terminal utilisateur UE ne les fournirait pas, à savoir via la fonction de réseau NWDAF (pour « NetWork Data Analytics Function » en anglais) ou d'un serveur externe au coeur de réseau, via la fonction de réseau NEF (pour « Network Exposure Function » en anglais).

Dans les modes de réalisation présentés ci-dessus, les informations de disponibilité sont fournis au terminal utilisateur par la fonction de gestion d'accès et de mobilité dans un message d'acceptation d'enregistrement REG_Acc (« REGISTER ACCEPT » en anglais) ou de mise à jour de configuration UE_CONF_UD (« UE CONFIGURATION UPDATE » en anglais ou UCU en abréviation). Ces éléments comprennent un ensemble de positions correspondants à un sur-échantillonnage de la trajectoire ou de la zone, chacune de ces positions ayant au moins un événement daté, par exemple via un temps GNSS absolu, e.g : temps GPS, associé à un changement d'état de couverture, pour toute la durée d'étude requise.

Pour chacun de ces événements, sont aussi avantageusement associés des éléments d'information permettant l'identification unique du faisceau dans le système. Notamment le type de satellite parmi les systèmes LEO, MEO, GEO, et autres, un identifiant de la cellule radio et un index de faisceau sont des informations utiles au terminal UE. La génération de ces informations de disponibilité est détaillée dans la suite.

La figure 4 montre plusieurs empreintes de satellites au sol S1, S2, S3 et S4. Ces empreintes sont calculées avec les coordonnées définissant la position du satellite, les angles, i.e. élévation E, azimut A, définissant l'orientation du faisceau BO et l'angle d'ouverture du faisceau.

En référence à la figure 2, un service de fourniture de données de disponibilité CMS est accessible à la fonction de gestion d'accès et de mobilité AMF. Ce service a accès aux données de couverture telles que définies sur la figure 4. Ces données sont connues du service de fourniture d'informations de disponibilité CMS qui collecte en effet des éléments fournis par le centre de contrôle SNCC du système satellite, soit des éphémérides décrivant les trajectoires des différents satellites, des paramètres d'identification des faisceaux, généralement un identifiant de la cellule radio et un index de faisceau, des paramètres de caractérisation des faisceaux, notamment taille et orientation. Ce service collecte aussi des éléments fournis par un centre opérations et maintenance du système de communication, soit une cartographie des zones de traçage, appelées « Tracking Area » en anglais, un état de fonctionnement des faisceaux, notamment si le faisceau est fonctionnel ou pas. Avantageusement, le centre de contrôle SNCC reçoit également des informations d'opérations et maintenance d'une entité du réseau 5G qui procède aux opérations et à la maintenance du système satellitaire et les fournit au service. Eventuellement des disponibilités de couverture autres que satellitaires mais accessibles par communications définies dans le standard 5G sont aussi accessibles au service de fourniture de données de disponibilité.

On note ici que ces caractéristiques de collecte des informations relatives à la mobilité satellitaire ne sont pas au coeur de l'invention qui qualifie en fait la nature de la communication entre le terminal et le coeur de réseau ainsi que la nature préférentielle des informations de disponibilité par utilisation d'événements de changement de couverture sur un sur-échantillonnage d'une zone définissant les positions possibles du terminal pendant une durée donnée.

Sur la figure 4, un ensemble de quatre points P0 à P3 qualifient une trajectoire du terminal UE. On note que les quatre points représentés sur la figure 4 peuvent, dans un autre contexte qualifier une zone polygonale dans laquelle est attendu le terminal UE pendant la durée définie par ailleurs.

La figure 5 montre ainsi un sur-échantillonnage d'une zone polygonale définie par quatre points P0 à P3. Le pas P tel que défini dans la requête de fourniture d'informations de disponibilité permet de définir la grille définissant des points de sur-échantillonnage Q0 à Q4 au sein du polygone défini par les points P0 à P3. Ainsi est obtenu un sur-échantillonnage à l'intérieur de la zone via un maillage de points espacés en X et Y de la valeur du pas P. On note ici qu'un maillage sur trois dimensions peut être également défini pour la mise en oeuvre de l'invention.

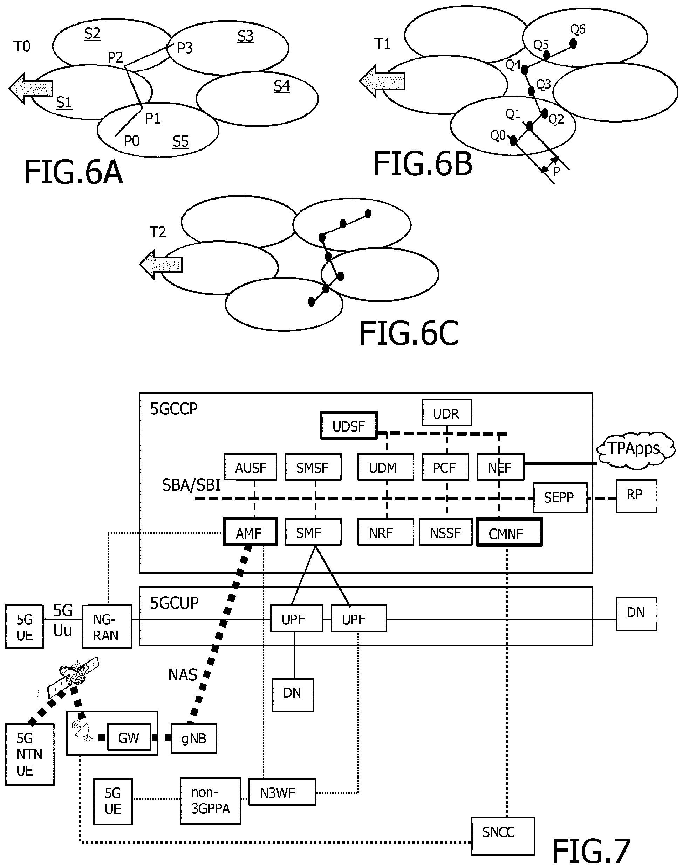

Les figures 6A à 6C donnent un exemple de génération des informations de disponibilités CI. Cet exemple est proposé dans un cas où le type de zone Z est une trajectoire définie par des points P0 à P3 ainsi que montré sur la figure 6A. Les informations de disponibilité CI produites seront retournées par la fonction de gestion d'accès et de mobilité AMF dans la couche NAS. Ces informations CI décrivent un trou de couverture selon une caractéristique avantageuse où seuls des événements sont signalés au terminal UE. Cela permet d'alléger la signalisation dans la couche NAS utilisée selon l'invention.

La figure 6A montre donc un ensemble de quatre points P0 à P3 définissant, cette fois, une trajectoire. Cette trajectoire est montrée à un instant T0 où la totalité de la trajectoire est sous couverture. Des empreintes satellitaires S1 à S5 sont schématiquement représentées. Ces empreintes sont mobiles ainsi que symbolisé par la flèche grise épaisse sur les figures 6A à 6C.

Le terminal utilisateur UE connait sa position courante P0, selon un système de coordonnées universelles qui permet de le localiser de façon unique à la surface du globe. Il convient de noter qu'un récepteur GNSS étant nécessaire au terminal NTN UE pour la compensation de « timing advance » et de Doppler permettant la synchronisation dans le sens montant « uplink », cette hypothèse est inhérente au système. Le GNSS va aussi permettre au terminal de disposer d'une source de datation absolue. Cependant on note ici que l'invention est particulièrement intéressante dans ce contexte mais qu'elle peut également adresser des cas où le terminal est contraint et ne dispose pas d'un récepteur GNSS et n'a pas d'accès à sa position ou seulement de manière dégradée. En particulier l'implémentation selon laquelle les données de disponibilité sont poussées vers le terminal peut adresser ces cas-là. Cela concerne potentiellement les futures Release des standards 3GPP, qui doivent étudier la faisabilité de la suppression des informations GNSS pour que le UE puisse se connecter au réseau satellite

Dans l'exemple proposé cependant, le terminal utilisateur UE connait un ensemble de positions {P1, P2, P3, ..., Pn} qui renseignent soit directement sur sa trajectoire future, soit qui délimitent une zone (polyèdre ou polygone) dans laquelle le terminal UE sera susceptible d'évoluer.

Aussi, à T=T0, le terminal UE fournit sa position actuelle P0 et les points futurs de sa trajectoire ou de sa zone d'évolution P1, P2, P3 dans une demande NAS, par exemple une demande d'enregistrement. Avantageusement il y ajoute un pas/distance de sur-échantillonnage P, une période d'étude D et une indication du type de forme Z, trajectoire ou zone d'évolution.

Si le terminal UE connaît sa future trajectoire, il indiquera le type de forme Z = trajectoire. Dans ce cas, la fonction de réseau AMF/MME définira des points échantillonnés {Q0, Q1, ..., Q6} éloignés du pas P le long de cette trajectoire, comme illustré sur la figure 6B.

Si le terminal UE ne connaît qu'une zone d'évolution possible, la liste de points fournie définit un polygone ou polyèdre et la fonction de réseau AMF/MME sur-échantillonne des points en deux dimensions à l'intérieur du polygone ou en trois dimensions à l'intérieur du polyèdre, en tenant compte de la distance d'échantillonnage P sur deux axes (par exemple X, Y), comme illustré à la figure 5.

Ainsi, lorsqu'elle reçoit la demande, la fonction de réseau AMF/MME contacte un serveur/service pour obtenir les informations de couverture actuelles et les informations de couverture prévues pour la période d'étude sur la liste de points sur-échantillonnés {Q0, ... , Qn}.

La fonction de gestion d'accès et de mobilité va alors s'interfacer avec un service de fourniture de données de disponibilité pour déterminer pour l'ensemble de positions sur-échantillonnées, dans l'exemple les points Q0 à Q6 de la trajectoire, et en récupérant pour chacun de ces points une liste définissant les changements dans la couverture de ces positions Q0 à Q6 sur-échantillonnées.

Dans le scénario illustré sur les figures 6A à 6C, à T=T0, la situation est telle que toutes les positions échantillonnées {Q0, Q1, Q2, Q3, Q5, Q6} sont sous couverture LEO. À T=T1 représenté sur la figure 6B, on prévoit que Q3 et Q4 perdront la couverture LEO, qui était assurée par, respectivement, les cellules identifiées S1 et S2. A T=T2 (avec T2 inférieur à la durée d'étude D) représenté sur la figure 6C, il est prévu que Q4 récupère une couverture LEO, avec l'identifiant de cellule S3.

Avantageusement donc, sont récupérés seulement les points de la zone ou de la trajectoire sur lesquels l'état de la couverture a changé parmi les positions anticipées du terminal sur-échantillonnées et associées à un élément temporel pour qualifier le changement.

La fonction de réseau AMF/MME va ensuite transmettre en retour au terminal utilisateur UE les éléments précédemment déterminés dans un message NAS en réponse, par exemple un message d'acceptation d'enregistrement REG_Acc ou un message de mise à jour de configuration UE_CONF_UD en 5G ainsi que montré sur la figure 3. Les informations de disponibilité de la couverture renvoyées au terminal UE dans un message descendant NAS, seront alors les suivantes, sous forme de liste d'événements :
- Q0 (POS=LAT, LONG, ALT) ; temps GNSS = T0 ; EVENT TYPE= COVERAGE LEO ; ID CELL =S5
- Q1 (POS=LAT, LONG, ALT) ; temps GNSS = T0 ; EVENT TYPE= COVERAGE LEO ; CELL ID =S5
- Q2 (POS=LAT, LONG, ALT) ; temps GNSS = T0 ; EVENT TYPE= COVERAGE LEO ; ID CELL =S5
- Q3 (POS=LAT, LONG, ALT) ; temps GNSS = T0 ; EVENT TYPE= COVERAGE LEO ; CELL ID =S1
- Q4 (POS=LAT, LONG, ALT) ; temps GNSS = T0 ; EVENT TYPE= COVERAGE LEO ; ID CELL =S1
- Q5 (POS=LAT, LONG, ALT) ; temps GNSS = T0 ; EVENT TYPE= COVERAGE LEO ; CELL ID =S2
- Q6 (POS=LAT, LONG, ALT) ; temps GNSS = T0 ; EVENT TYPE= COVERAGE LEO ; CELL ID =S3
- Q3 (POS=LAT, LONG, ALT) ; temps GNSS = T1 ; EVENT TYPE= NO_COVERAGE LEO ; CELL ID =S1
- Q4 (POS=LAT, LONG, ALT) ; temps GNSS = T1 ; EVENT TYPE= NO_COVERAGE LEO ; CELL ID =S1
- Q4 (POS=LAT, LONG, ALT) ; temps GNSS = T2 ; EVENT TYPE= COVERAGE LEO ; CELL ID =S3

On note ici que seuls deux types d'événements sont utilisés : présence de couverture et absence de couverture. Les changements de cellules ne donnent pas lieu à un événement spécifique dans cet exemple ce qui permet de réduire la quantité de données transmises et de s'appuyer sur le terminal pour procéder de lui-même au changement de cellule.

Il n'est pas non plus indiqué s'il s'agit, dans le cas d'une présence de couverture, d'une récupération de couverture ou, dans le cas d'une absence de couverture, d'une perte de couverture. Il reste cependant possible d'ajouter des types d'événements « perte » et « récupération » en plus des deux mentionnés au-dessus. Cela augmente cependant la taille des données de disponibilité à transmettre.

La description fonctionnelle ainsi que le contenu des messages NAS précédents sont mis à jour dans les spécifications TS 23.501/502 et 24.501 (TS 23.401/402 et TS 24.301) pour refléter les éléments de trajectoire et de couverture précédents en respectant les exigences des protocoles NAS.

Dans le cas 5G, ainsi que vu précédemment, la fonction de réseau AMF ("Access and Mobility Function") peut aussi de façon optionnelle avoir souscrit à une autre fonction de service pour être notifié des changements des caractéristiques de couverture le long de la trajectoire ou dans la zone délimitée. Dans cette configuration et en cas de changement effectif de caractéristiques reçu par la fonction de gestion d'accès et de mobilité AMF, cette dernière pourra envoyer ces nouvelles caractéristiques au terminal UE en utilisant le message de configuration du terminal UE_CONF_UD, et ceci tant que le terminal UE restera enregistré sur le réseau.

L'invention prévoit également optionnellement, dans le cas de la norme 5GS, la définition et l'intégration d'une nouvelle fonction de réseau de gestion de couverture pour gérer notamment les cartes de couverture dans l'architecture SBA/SBI 5GC (SBA pour « Service-Based Architecture » et SBI pour « Service-Based Interface »). Cela permet de tirer parti de cette architecture et de normaliser la définition de l'interface AMF au moyen de nouvelles API NF (API pour « Application Programming Interface » et NF pour « Network Function »): Ncmnf_communication et Ncmnf_EventExposure.

Ainsi, dans le mode de réalisation préféré illustré par la figure 7, un service en charge de la définition et gestion des zones de couverture est intégré à l'architecture SBA. Une fonction de réseau de gestion de couverture CMNF « Coverage Map Management network Function » tel que décrit dans la demande de brevet: EP22305714 est alors intégrée au plan de contrôle du coeur de réseau 5GCCP.

Dans le mode de réalisation préféré combinant la présente invention et celle décrite dans la demande n°22305714, la fonction de réseau AMF peut ainsi souscrire auprès du CMNF pour être notifié par celui-ci de possibles changements d'éléments de couverture pour la trajectoire. Le cas échéant, la fonction de réseau AMF enverra un nouveau message de mise à jour de configuration UE_CONF_UD au terminal UE avec les nouveaux éléments relatifs à la couverture.

On note ici que les informations de disponibilité telles que décrites et revendiquées dans l'invention présente peuvent être produites par le CMNF défini dans la demande EP22305714 incorporée par référence. Aussi les informations de disponibilité telles que décrites dans cette demande précédente peuvent aussi constituer des informations de disponibilité qui peuvent être communiquées via la couche NAS vers le terminal. Les deux sortes de données de disponibilité sont envisageables pour la mise en oeuvre de l'invention. On note aussi ici que d'autres sortes de données de disponibilité du type carte de points pourraient aussi être communiquées via un protocole NAS telle que cela est revendiqué. Cependant cela nécessite une augmentation des quantités de données à transmettre en comparaison avec une liste d'événements selon l'invention.

Avec ce mode de réalisation préféré, la fonction de gestion d'accès et de mobilité AMF demande une liste d'événements de couverture au CMNF, en fournissant dans la demande les paramètres reçus du terminal UE dans le message NAS, ou alternativement les paramètres reçus d'une fonction applicative AF (« Application Function » en anglais) externe via la fonction de réseau NEF ou reçus en provenance de la fonction de réseau NWDAF. La fonction de réseau CMNF fournit en réponse une liste d'événements de couverture, et la fonction de réseau AMF renvoie la liste d'événements au terminal UE dans un message NAS descendant.

La fonction de réseau AMF peut également souscrire à tout changement concernant les informations de couverture pour une trajectoire ou un ensemble de paramètres de zone d'évolution. Dans ce mode, la fonction de réseau CMNF réévalue périodiquement la couverture pour les positions sur-échantillonnées et gère la liste des événements pendant la période d'étude, en générant une notification avec une nouvelle liste si de nouveaux événements sont prévus ou se produisent pendant la période. Dans ce cas, la fonction de réseau AMF reçoit la notification du CMNF et génère un message de mise à jour de la configuration du terminal UE avec la liste d'événements actualisée, ensuite envoyé au terminal UE.

Dans la description détaillée ci-dessus, il est fait référence aux dessins annexés qui montrent, à titre d'illustration, des modes de réalisation spécifiques dans lesquels l'invention peut être mise en oeuvre. Ces modes de réalisation sont décrits de manière suffisamment détaillée pour permettre à l'homme du métier de mettre en pratique l'invention. La description détaillée ci-dessus ne doit donc pas être prise dans un sens limitatif, et la portée de la présente invention est définie uniquement par les revendications annexées, interprétées de manière appropriée.

## Revendications

1. Procédé de transmission d'informations de disponibilité de couverture dynamique entre un coeur de réseau, comprenant une fonction de gestion d'accès et de mobilité et collaborant avec un réseau d'accès présentant une couverture dynamique, et un terminal apte à se connecter au réseau d'accès, le procédé comprenant les étapes suivantes, pour la fonction de gestion d'accès et de mobilité :
- recevoir un ensemble de points caractérisant des positions anticipées du terminal,
- récupérer des informations de disponibilité de couverture dynamique pour au moins un point appartenant aux positions anticipées du terminal,
- envoyer au terminal un message de signalisation, dans la couche Non-Access Stratum NAS, comprenant les informations de disponibilité de couverture dynamique récupérées.

2. Procédé selon la revendication 1, dans lequel les informations de disponibilité de couverture dynamique comprennent des événements liés à la couverture dynamique, un événement étant qualifié par une nature d'événement, un horodatage et des coordonnées d'un point des positions anticipées du terminal.

3. Procédé selon la revendication 2, dans lequel la nature d'événement est une absence de couverture ou une présence de couverture.

4. Procédé selon l'une des revendications précédentes, dans lequel une fenêtre temporelle d'étude de la disponibilité de la couverture dynamique étant définie, les événements liés à la disponibilité de la couverture dynamique ont un horodatage inclus dans la fenêtre temporelle d'étude.

5. Procédé selon l'une des revendications précédentes, dans lequel, un pas d'échantillonnage des positions anticipées du terminal étant défini, les informations de disponibilité de couverture dynamique sont limitées à des points ainsi échantillonnés.

6. Procédé selon l'une des revendications précédentes, dans lequel un type de zone est associé à l'ensemble de points caractérisant des positions anticipées du terminal, la zone alors définie par l'ensemble de points pouvant être de type trajectoire ou de type polygone ou de type polyèdre dans lequel le terminal est susceptible d'évoluer.

7. Procédé selon l'une des revendications précédentes, dans lequel les informations de disponibilité de couverture dynamique sont récupérées auprès d'un service de fourniture d'informations de disponibilité de couverture dynamique centralisé associé au coeur de réseau.

8. Procédé selon la revendication 7, dans lequel le service de fourniture d'informations de disponibilité de couverture dynamique centralisé est intégré au coeur de réseau en tant que fonction de réseau selon une architecture de services.

9. Procédé selon l'une des revendications précédentes, dans lequel, l'ensemble de points est reçu en provenance du terminal, celui-ci étant apte à déterminer sa position et des positions futures.

10. Procédé l'une des revendications 1 à 8, dans lequel l'ensemble de points est reçu en provenance d'une entité de gestion du réseau ayant accès à la position du terminal et aux positions anticipées.

11. Procédé selon l'une des revendications précédentes, le procédé comprenant des étapes de :
- enregistrement du terminal à un service de mise à jour des informations de disponibilité de couverture dynamique,
- envoi automatique d'informations de disponibilité de couverture dynamique mises à jour au terminal dans un message de signalisation dans la couche NAS.

12. Fonction de gestion d'accès et de mobilité intégrée à un coeur de réseau collaborant avec un réseau d'accès présentant une couverture dynamique, la fonction de gestion d'accès et de mobilité comprenant une interface de communication configurée pour communiquer avec un terminal apte à se connecter au réseau d'accès,
la fonction de gestion d'accès et de mobilité étant configurée pour réaliser un procédé selon l'une des revendications précédentes, et pour cela, configurée pour :
- recevoir un ensemble de points caractérisant des positions anticipées du terminal,
- récupérer des informations de disponibilité de couverture dynamique pour au moins un point appartenant aux positions anticipées du terminal,
- envoyer au terminal un message de signalisation, dans la couche NAS, comprenant les informations de disponibilité de couverture dynamique récupérées.

13. Coeur de réseau comprenant une fonction de gestion d'accès et de mobilité selon la revendication 12.

14. Coeur de réseau selon la revendication 13, **caractérisée en ce qu'**un service de fourniture d'informations de disponibilité de couverture dynamique est intégré au coeur de réseau en tant que fonction de réseau selon une architecture de services.

15. Terminal apte à se connecter à une fonction de gestion d'accès et de mobilité d'un coeur de réseau selon l'une des revendications 13 et 14 via un réseau d'accès présentant une couverture dynamique, le terminal ayant accès en outre un dispositif de géolocalisation pour déterminer sa position géographique, le terminal étant configuré pour :
- recevoir, en provenance de la fonction de gestion d'accès et de mobilité, un message de signalisation dans la couche NAS comprenant des informations de disponibilité de couverture dynamique,
- gérer les connexions au réseau d'accès en fonction des informations de disponibilité de couverture dynamique reçues et de la position géographique du terminal.

16. Terminal selon la revendication 15, configuré pour :
- déterminer un ensemble de points caractérisant des positions anticipées du terminal,
- envoyer, à la fonction de gestion d'accès et de mobilité, un message dans la couche NAS incluant l'ensemble de points ainsi déterminé pour lui permettre de récupérer les informations de disponibilité.
